# EUROPEAN PATENT APPLICATION

(11) **EP 4 701 157 A1**
(43) Date of publication of application: **25.02.2026**
(21) Application number: 25197642.9
(22) Date of filing: 22.08.2025
(51) Int. Cl.: H04L 65/10, H04W 4/90

(54) **ELECTRONIC METHOD AND SYSTEM FOR CONTEXT-AWARE EMERGENCY COMMUNICATION**

(30) Priority: 22.08.2024 US 202418812533
(71) Applicant: Mitel Networks Corporation, Ottawa, Ontario K2K 3K1 (CA)
(72) Inventor: Murthy, Tejas, 560078 Bangalore (IN); HN, Shiva, 562112 Karnataka (IN); Naidoo, Logendra, Ottawa, K1S 0W8 (CA)
(74) Representative: McDougall, James

(57) **Abstract**

Systems and methods for providing context-aware emergency information during an electronic communication are disclosed. The system can include an electronic communication device that includes a virtual assistant. The virtual assistant can autonomously provide information to a user and/or to an emergency response service provider during an emergency communication. Additionally or alternatively, the virtual assistant can automatically manipulate one or more functions on the electronic communication device and/or send a signal to manipulate one or more functions on a responder device.

## Description

### FIELD OF THE DISCLOSURE

The present disclosure generally relates to electronic communication systems and methods. More particularly, the disclosure relates to electronic communication methods and systems capable of determining a context of an emergency and/or managing a communication during an emergency.

### BACKGROUND OF THE DISCLOSURE

Many countries have an emergency response phone number that users can call to connect the caller to a call center, such as a public safety answering point (PSAP) call center of a government agency, which has jurisdiction over an area from which the caller is calling. The call center receives the call and can, in some cases, dispatch appropriate resources, such as firefighters, police, or ambulance first responders.

Many emergency response systems use enhanced emergency calling systems (e.g., e911 in North America) or similar technology to identify a phone number from which an emergency call was made and an address or location corresponding to that phone number. Such systems generally include a database, such as a private switch/automatic location information database, that allows the PSAP to look up the caller's address associated with the phone number from which the call is made. Emergency calls can also be made from mobile phones. In the case of e911 and similar services, when an emergency call is originated from a mobile phone or similar device, nearest cell tower information and GPS location information can be sent to a call center to help identify a location of the caller.

While such systems can access stored information, such as caller location, caller information (e.g., name, age, or the like) and provide the stored information during a call, such systems cannot generally determine a context of an emergency and do not generally continue to monitor an emergency call and/or automatically manage the call (e.g., manage one or more of a caller's device or a responder's device). Rather, during a typical emergency communication, a user provides details regarding the emergency situation via an electronic communication. Such a communication can be unsafe in situations like home invasions where silence may be desired.

Accordingly, improved systems and methods for providing context-aware emergency communication are desired. The improved systems and methods may desirably leverage existing databases and systems.

### SUMMARY

A first aspect of this disclosure provides an electronic communication method comprising the steps of: using an electronic communication device comprising a virtual assistant, monitoring background information for an emergency event; determining a context of the emergency event; using the electronic communication device, initiating an electronic emergency communication; and transmitting context-based information to an emergency response service provider.

The virtual assistant may automatically initiate the electronic emergency communication.

Determining the context may comprise determining a type of the emergency event.

The electronic communication method may further comprise determining a threat level of the emergency event.

The electronic communication method may further comprise a step of monitoring a call context, wherein, based on the call context, the virtual assistant suspends or manipulates one or more of audio output and visual output on the electronic communication device.

The electronic communication method may further comprise a step of monitoring a call context, wherein, based on one or more of the call context and the context-based information, the virtual assistant provides information to a user, indicating that the virtual assistant is handling the emergency electronic communication.

The emergency response service provider may be an emergency call center.

The electronic communication method may further comprise providing information from a call server to the emergency response service provider.

The server may comprise a PBX.

The electronic communication method may further comprise a step of sending ancillary information from an ancillary device via the electronic communication device to the emergency response service provider.

A second aspect of this disclosure provides an electronic context-aware emergency communication method comprising the steps of: using an electronic communication device comprising a virtual assistant, monitoring background information for a possible emergency event; using a context determination engine, determining whether the possible emergency event is an emergency event; using the electronic communication device, initiating an emergency electronic communication; and using the electronic communication device, transmitting context-based information to an emergency response service provider.

The step of initiating an emergency electronic communication may be automatically performed by the virtual assistant upon determination of the emergency event.

The virtual assistant may determine a preferred mode of communication between the electronic communication device and the emergency response service provider.

The electronic context-aware emergency communication method may further comprise receiving ancillary information from an ancillary device and transmitting the ancillary information to the emergency response service provider.

The step of transmitting the ancillary information may comprise sending real-time user health information.

The electronic context-aware emergency communication method may further comprise a step of sending information to a responder device based on the context-based information.

The electronic context-aware emergency communication method may further comprise a step of, using the virtual assistant, manipulating one or more of audio output and visual output on the electronic communication device.

A third aspect of this disclosure provides a system for providing context-aware emergency information, the system comprising: an electronic communication device comprising a virtual assistant; and a context determination engine, wherein the virtual assistant monitors background information received by the electronic communication device for a possible emergency event, and wherein the context determination engine determines a context of the possible emergency event and provides context information to the virtual assistant.

The virtual assistant may manipulate one or more of audio output and visual output on the electronic communication device based on the context information.

The electronic communication device may comprise the context determination engine.

### BRIEF DESCRIPTION OF THE DRAWING FIGURES

Subject matter of the present disclosure is particularly pointed out and distinctly claimed in the concluding portion of the specification. A more complete understanding of the present disclosure, however, may best be obtained by referring to the detailed description and claims when considered in connection with the drawing figures.
FIG. 1 illustrates a system in accordance with exemplary embodiments of the disclosure.
FIG. 2 illustrates a method in accordance with exemplary embodiments of the disclosure.
FIG. 3 illustrates another method in accordance with exemplary embodiments of the disclosure.

It will be appreciated that elements in the figures are illustrated for simplicity and clarity and have not necessarily been drawn to scale. For example, the dimensions of some of the elements in the figures may be exaggerated relative to other elements to help to improve understanding of illustrated embodiments of the present disclosure.

### DETAILED DESCRIPTION OF EXEMPLARY EMBODIMENTS

The description of various embodiments of the present disclosure provided below is merely exemplary and is intended for purposes of illustration only; the following description is not intended to limit the scope of an invention disclosed herein. Moreover, recitation of multiple embodiments having stated features is not intended to exclude other embodiments having additional features or other embodiments incorporating different combinations of the stated features.

Various exemplary embodiments of the disclosure provide methods and systems for determining a context during an emergency call, providing virtual assistance during an emergency call, and/or automatically managing one or more communication devices based on a context determined during an emergency call. While the ways in which exemplary methods and systems address the drawbacks of prior methods and systems are addressed in more detail below, in general, exemplary systems and methods can monitor background information and/or communication information to determine context information and, based on a context, manage one or more communication devices and/or use a virtual assistant to manage or facilitate the communication.

Existing electronic communication systems can provide immediate data, such as the caller's location or basic incident details (e.g., details triggered by sensors or an emergency button), but such systems generally lack a capability to understand and/or convey a broader context of a situation and/or take action based on the context.

In emergency situations like a home invasion, calling an emergency response service provider (e.g., dialing 911 in the United States or Canada) can put the victim at risk. Speaking aloud to emergency operators can distract users from staying safe and might alert the intruder to their location. In such cases, it is safer to quietly evacuate or hide than to speak with emergency services and risk being overheard.

Examples of the disclosure can use information received on an electronic communication device (e.g., via sensors and/or microphones) and/or an ancillary device (e.g., communicatively coupled to electronic communication device) and determine context of such information so that, for example, a virtual assistant can use the context information to provide context-aware emergency communication to emergency response center personnel and/or a user/caller. This approach can facilitate transmission of a context-aware emergency communication in a way that supports the emergency responders, while allowing the user to remain focused on their immediate safety. In some cases, the virtual assistant can also act as a mediator, relaying vital context to the user and/or responder, without compromising the user's concentration or alerting potential intruders.

As set forth in more detail below, instead of merely passing on raw data, exemplary electronic communication systems described herein use information received by an electronic communication device and convert such information into meaningful vocabulary that aids emergency response service providers and/or responders. For example, a virtual assistant can act as a concierge, facilitating conveyance of critical or desired information to emergency relief providers and/or the user and/or to others.

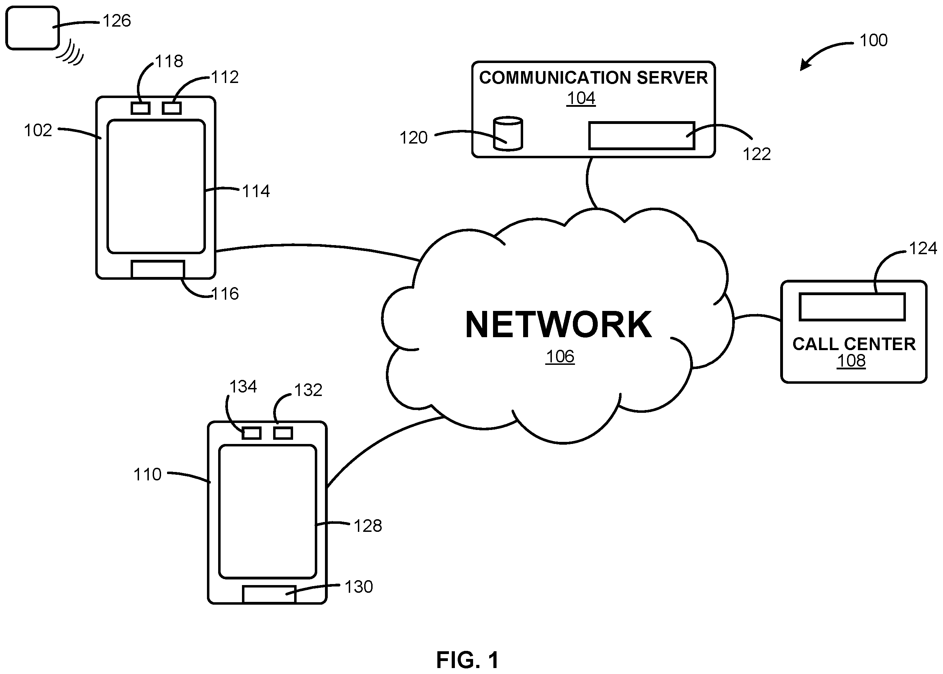

Turning now to the figures, FIG. 1 illustrates a system 100 in accordance with exemplary embodiments of the disclosure. System 100 includes a (e.g., user or caller) device 102, a communication server 104, a network 106, a call center 108, and a responder device 110. Systems in accordance with various embodiments can include any suitable number of electronic communication devices 102 and/or responder devices 110. Further, in accordance with additional examples of the disclosure, a system can include a subset of one or any combination of devices and servers described herein.

Device 102 can include any suitable device with wired or wireless communication features. For example, electronic communication device 102 can include a wearable device, a tablet computer, a smart phone, a personal (e.g., laptop) computer, a streaming device, such as a game console or other media streaming device, such as Roku, Amazon Fire TV, or the like, or any other device that includes communication capabilities.

In accordance with some exemplary aspects of various embodiments of the disclosure, device 102 includes one or more sensors 112, a display 114, a speaker 116, and a virtual assistant 118. Device 102 can include various components, such as those found in typical smart devices, such as smart phones.

One or more sensors 112 can be or include, for example, a microphone, an accelerometer, a gyroscope, a temperature sensor, a radiation sensor, or the like. Display 114 and a speaker 116 can be or include any suitable display or speaker, such as those found in smart phone or similar devices.

Virtual assistant 118 can be a stand-alone module or form part of a native dialing application and/or an operating system on device 102 or be an application plugin. In accordance with examples of the disclosure, virtual assistant 118 monitors background information received by electronic communication device 102 (e.g., via one or more sensors 112) for a possible emergency event and/or automatically performs a task on behalf of a user based on a context. For example, virtual assistant 118 can automatically manipulate one or more of audio output and display output on the electronic communication device 102 based on context information, can automatically initiate an electronic emergency communication, and/or can automatically cause context-based information to be transmitted from electronic communication device 102 to an emergency response service provider. Additionally or alternatively, virtual assistant 118 can automatically provide context-based information to an emergency response service provider and/or to a responder-even if the user is incapacitated or managing the emergency, thus ensuring continuous, effective support without compromising the user's immediate safety or focus. In some cases, virtual assistant 118 can interpret static sensor data, such as collision detection, window breach detection, breaking glass detection, background sounds, location information, and the like and turn such static information into meaningful vocabulary to advise an emergency response service provider and/or emergency response personnel.

The term module or engine as used herein can refer to computer program instructions, encoded on computer storage medium for execution by, or to control the operation of, data processing apparatus. Alternatively or additionally, the program instructions can be encoded on an artificially generated propagated signal, e.g., a machine-generated electrical, optical, or electromagnetic signal, which is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of the substrates and devices. Moreover, while a computer storage medium is not a propagated signal, a computer storage medium can be a source or destination of computer program instructions encoded in an artificially generated propagated signal. The computer storage medium can also be, or be included in, one or more separate physical components or media (e.g., solid-state memory that forms part of a device, disks, or other storage devices).

Virtual assistant 118 can be configured to monitor for an emergency event and/or a possible emergency event and present potential emergency events to a user for a user to select an emergency or acknowledge that there is no emergency. If a possible emergency event is detected and potential emergency events are presented to a user and the user does not respond within a predetermined about of time (e.g., less than 30, 20, or 10 seconds), the virtual assistant can automatically initiate an electronic emergency communication and manage the communication.

In accordance with some embodiments of the disclosure, virtual assistant 118 runs in the background when electronic communication device 102 is powered on and/or can be configured to run during an emergency call and/or once an emergency event or possible emergency event is detected by electronic communication device 102. When running, in addition to other functions described herein, virtual assistant 118 can track location information of a caller, even if a caller is moving, and provide updated or real-time location information to communication server 104, network 106, and/or call center 108. This allows call center 108 to track a caller after the caller initiates the emergency call.

In accordance with examples of the disclosure, virtual assistant 118 can provide continually updated information that is transmitted (e.g., to an emergency response service provider) during a call. In some cases, virtual assistant 118 runs continuously during an emergency communication and relies on natural language processing (NLP) for real-time conversation analysis. Virtual assistant 118 can also offer anticipatory support and intelligent assistance capabilities not found in traditional collaborative systems where the communication is mission critical.

As set forth in more detail below, virtual assistant 118, in combination with context determination engine 122, can intelligently detect a nature or type of crisis either through direct user input or through analysis of the background situation and conversation. Once the emergency type is identified, the system can perform various actions, such as intentionally suspend two-way audio communication to prevent any potential risk, such as revealing the user's location during a home invasion.

In accordance with examples of the disclosure, virtual assistant 118 can be configured to determine a type and/or threat level of an emergency using:
Data Inputs for a working algorithm that include:
- Pre-Call Dialogue (real-time audio):
   ∘ Urgency Keywords
   ∘ Stress Tone Analysis
- Metadata Analysis (e.g., GPS data for location accuracy):
   ∘ Precise Location Data
   ∘Personal Medical History
- System-Linked Data (e.g., home management systems and vehicles):
   ∘Home System Alerts
   ∘ Vehicle Telemetry Data
- Threat Assessment (combination of home management system data, vehicle telemetry):
   ∘ Accident Severity Analysis
   ∘ Intrusion Threat Level

By way of particular examples, virtual assistant 118, alone or in combination with context determination engine 122, can be configured to:
- Eavesdrop for urgency keywords like "help" and analyze the caller's stress tone.
- Use GPS to find the caller's location and check medical history.
- Review ancillary device sensor data (e.g., home security alerts and vehicle crash data).
- Identify emergencies based on keywords and stress tone. In some cases, a threat level can be determined via a stress tone.
- For severe crises, the virtual assistant stops audio (e.g., disables speakers 116) to avoid alerting intruders. The virtual assistant can send key information, like the type of emergency, location, threat level, and people involved, to responders. For less severe cases, the virtual assistant can keep communication open.
- Adjust communication strategies to facilitate effective and safe communication.

Communication server 104 can be or include a private branch exchange (PBX) server or other suitable telephone exchange or switching system/server. In some cases, communication server 104 can provide a connection between electronic communication device 102 and call center 108. In accordance with various embodiments of the disclosure, communication server 104, upon detecting an emergency call and seeing the emergency location field (e.g., a DN), applies special call handling on the outbound call leg to call center 114. For example, communication server 104 can include a database 120. Communication server 104 can use information in database 120 and provide corresponding location information-and/or caller information-in addition to information received from the caller and/or virtual assistant 118 to call center 108 during an emergency call.

In the illustrated example, communication server 104 includes a context determination engine 122. Context determination engine 122 is configured to determine a context of a possible emergency event and/or of an emergency event and provide context information to virtual assistant 118. Although illustrated as part of communication server 104, context determination engine 122 can alternatively reside on electronic communication device 102 or another device communicatively coupled to electronic communication device 102.

To determine the context(s) within communication information (e.g., information provided by the user) and/or background information (e.g., information, such as sound other than from the user), context determination engine 122 can analyze sounds or keywords, such as words, phrases, clauses, and/or topics within the audio and/or text information. Context determination engine 122 can also be configured to store or to cause to be stored associated information, such as the keywords, context, and/or cues in database 120 and/or another database.

As used herein, "context" and/or "context information" can be or include keywords as described herein. Additionally or alternatively, "context" and/or "context information" can include information derived from keywords. For example, keywords can be or comprise objects and/or actions as set forth in U.S. Publication No. 2012/0179706 A1, the contents of which are incorporated herein by reference, to the extent such contents do not conflict with the present disclosure. Additional examples of determining and using keywords and context information are provided in U.S. Publication No. 2020/0184018 A1, filed December 11, 2018, in the name of Mitel Networks Corporation, the contents of which are incorporated herein by reference, to the extent such contents do not conflict with the present disclosure.

Network 106 can include a local area network (LAN), a wide area network, a personal area network, a campus area network, a metropolitan area network, a global area network, a local exchange network, a public switched telephone network (PSTN), a cellular network, the like, and any combinations thereof. Network 106 may be coupled to communication server 104 and/or call center 108 using an Ethernet connection, other wired connections, or wireless interfaces. Network 106 may be coupled to other networks and/or to other devices typically coupled to networks.

Call center 108 can include a call center server 124. Call center server 124 can be or include any apparatus, such as the apparatus described above, in connection with communication server 104.

Electronic communication device (responder device) 110 can be a device as described above in connection with electronic communication device 102, although in at least some cases, electronic communication device 110 need not include a virtual assistant as described herein or may include a virtual assistant that is configured differently. In the illustrated example, electronic communication device 110 includes one or more sensors 132, a display 128, a speaker(s) 130, and a module 134. Module 134 can receive a signal from virtual assistant 118 and/or call center 108, to for example, disable speaker(s) 130 and/or display 128 on device 110.

System 100 can also include one or more ancillary devices 126. Ancillary device(s) 126 can communicate periodically and/or in real time with electronic communication device 102. Ancillary device(s) 126 can provide information about a user or caller, such as heart rate, blood sugar, or about an object, such as a car (e.g., a crash detected and/or a number of people with the car), a temperature (e.g., as part of a thermostat), video information, or the like.

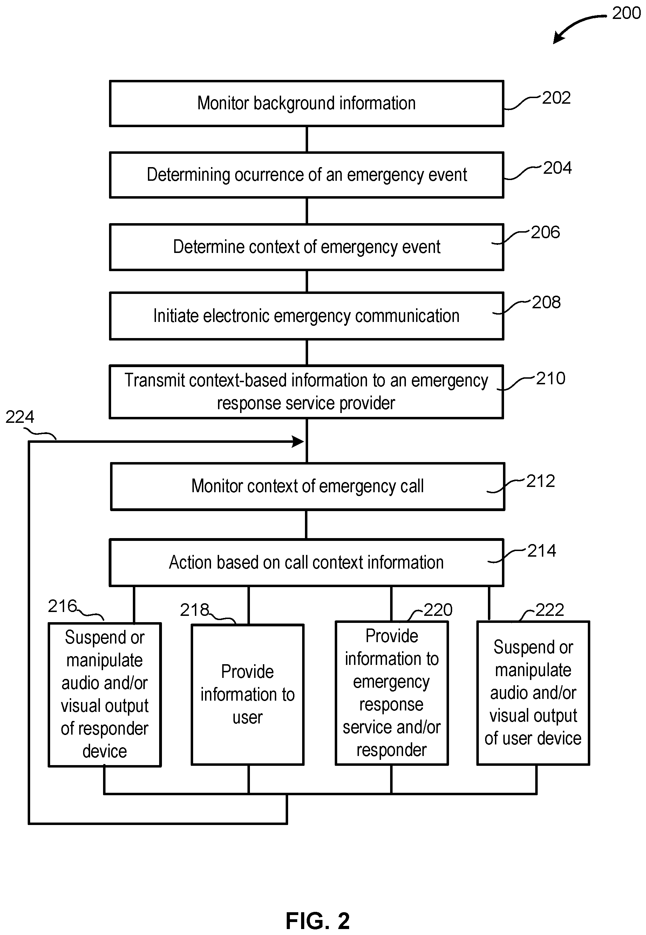

FIG. 2 illustrates an electronic communication method 200 in accordance with additional examples of the disclosure. Method 200 includes the steps of monitoring background information for an emergency event or possible emergency event 202, determining an occurrence of an emergency or a possible emergency event 204, determining a context of the emergency event or the possible emergency event 206, initiating an electronic emergency communication 208, and transmitting context-based information to an emergency response service provider 210. As illustrated, method 200 can also include monitoring a context of an emergency call 212, and taking action based on the context 214.

During step 202, an electronic communication device comprising a virtual assistant monitors background information for an emergency event and/or a possible emergency event. The virtual assistant (e.g., virtual assistant 118) can begin monitoring for an emergency event and/or a possible emergency event upon activation of the electronic communication device, upon activation of one or more applications (e.g., a phone dialing application) on the electronic communication device, or upon dialing an emergency number using the electronic communication device. The virtual assistance can be configurable, such that a user can select one of these options.

During step 202, information received by the electronic communication device can be sent to a context determination engine, such as context determination engine 122. For example, either audio information or transcribed information can be sent to the context determination engine to determine context of the background information. Context determination engine reviews the background information and determines a context of the emergency event or the possible emergency event. The context determination engine can then transmit such information to the electronic communication device and/or another recipient as described herein.

As noted above, the context determination engine can be located remotely-e.g., on a server, or can be located on the electronic communication device.

During step 204, an emergency event is determined. The emergency event can be determined from monitoring background information for an emergency event during step 202 or can be based on an initiation of an emergency call using a call and/or text application on the electronic communication device.

If an emergency event is determined via monitoring background information, upon determination of the emergency event, the virtual assistant can receive emergency event information from the context determination engine and automatically initiate an emergency call (step 208). In some cases, the virtual assistance can use GPS location information to determine an emergency number to be dialed. In some cases, the virtual assistance may call a police department, a fire department, or an ambulance service directly based on a location of the electronic communication device, rather than calling an emergency call center. In other cases, step 208 can include the user calling an emergency service, such as an emergency call center or directly dial a police department, a fire department, or an ambulance service.

Whether initiated automatically via the virtual assistant or via user input, once the call to the emergency response service provider is initiated, context-based information is transmitted to the emergency response service provider during step 210. In some cases, context-based information provides a type of emergency, such as health (e.g., heart attack, blood sugar out of range) or an event (e.g., a fall or a crash, fire, assault, break in, or the like) during a beginning of a call. In some cases, the virtual assistant can ask a user to verify the type of emergency prior to sending. In some cases, the type of emergency can be sent automatically-either immediately or after presented to the user and no response is received from the user-e.g., after 10, 20, or 30 seconds.

In accordance with additional examples of the disclosure, method 200 further includes determining a threat level of the emergency event-either as part of step 210 or as an additional step. A threat level may range from, for example, 1 (low) to 5 (high). If the threat level is low (e.g., a 1 or 2 out of 5), the call center may continue monitoring the call and not send immediate assistance. If the threat level is high (e.g., a 3, 4 or 5 out of 5), the call center may continue monitoring the call and send immediate assistance.

In accordance with particular examples, context-based information that is transmitted during an electronic communication method as described herein can include:
- Information about the user's current location (e.g., automatically determined using the device's GPS or network-based location services).
- Information based on the conversation analysis and context: the virtual assistant can infer the type of emergency (medical, fire, security threat, etc.) and transmit.
- AI assistant information that provides an estimated time of when the emergency situation started and/or when responders will arrive at a scene.
- The virtual assistant can detect multiple voices or references to other people and inform responders about the potential number of individuals involved or in harm's way.
- Assuming the conversation prior to the emergency included any references to physical health or medical conditions (like a bee sting, or known medical issues), such information can be relayed.
- Information about potential environmental hazards in the vicinity, like crash detection, fire, gas leaks, or hazardous materials, inferred from background noise analysis or conversation context.
- If the virtual assistant is monitoring the user's activity, the virtual assistant can impart context about what the user was doing before the emergency, which might be relevant (e.g., talking, driving, drinking or eating, or the like).
- Details of emergency contacts preset by any user, which can include family members, close friends, or primary care physicians.

During step 212, the virtual assistant monitors call information and the context determination engine determines call context information. The call information can include background information and/or user audio (e.g., speech or other sounds, such as screams or crying) and/or text input.

During step 214, one or more actions are performed based on the call context information. In the illustrated example, the actions include: suspending or manipulating audio and/or visual output of a responder device 216 (e.g., device 110-e.g., when a responder is near a user to, e.g., mitigate distractions or exacerbation of a crisis), providing information to a user 218 (e.g., graphically, via text, and/or audibly; such information can inform the user that the virtual assistant is active and/or is communicating with an emergency response service provider), providing information to emergency response service provider 220, and/or suspending or manipulating audio and/or visual output of the electronic communication device 222 (e.g., device 102). An act of selectively and automatically suspending two-way audio communications can be desirable for maintaining privacy and safety during emergencies like home invasions. Such a feature can significantly enhance the user's security by not revealing the user's location or status to potential intruders or the like.

Such actions can be based on context-based information transmitted to the emergency response service provider and/or the call context. For example, the virtual assistant can suspend or manipulate one or more of audio output and visual output on the electronic communication device. By way of particular example, the virtual assistant can silence the phone, turn off the display lighting, turn the speaker volume level down, turn a display brightness down, or the like. Additionally or alternatively, based on the context-based information or the call context, the virtual assistant provides information (e.g., via a display (e.g., display 114) and/or speaker (e.g., speaker 116) to a user, indicating that the virtual assistant is handling the emergency electronic communication.

In accordance with additional examples of the disclosure, method 200 can additionally include providing call server information from a call server to the emergency response service provider. Such call server information can include, for example, user identification information (e.g., from a database, such as database 120), electronic communication device location information, user health information, and the like. Communication device location information can include any suitable location information including, for example, a DN, ERL, ELIN and/or CESID information. In some cases, the location information can include location information associated with a stationary device, to provide relatively accurate location information. The location information can be transferred to a call center and/or to a responder. For example, in the case of a VoIP call, emergency location information can be sent to a call server (e.g., a PBX). The call server, upon detecting an emergency call and seeing the emergency location field, can apply special call handling on the outbound call leg to a call center. In the case of cellular calls, a mobile phone can transmit location information directly to a call center. The mobile phone can additionally transmit cell tower and/or GPS information at the initiation of and/or during the call.

In accordance with further examples, ancillary information is broadcast to the electronic communication device. In these cases, method 200 can further include a step of sending ancillary information from the ancillary device via the electronic communication device to the context determination engine, the communication server, and/or the emergency response service provider. For example, vital signs of a caller and/or information from an object can be sent to the emergency response service provider, which can forward the information to a responder device.

As illustrated in FIG. 2, method 200 can include continually monitoring call context information (loop 224) and taking various actions based on the call context information. At the conclusion of an emergency, method 200 can start again at step 202.

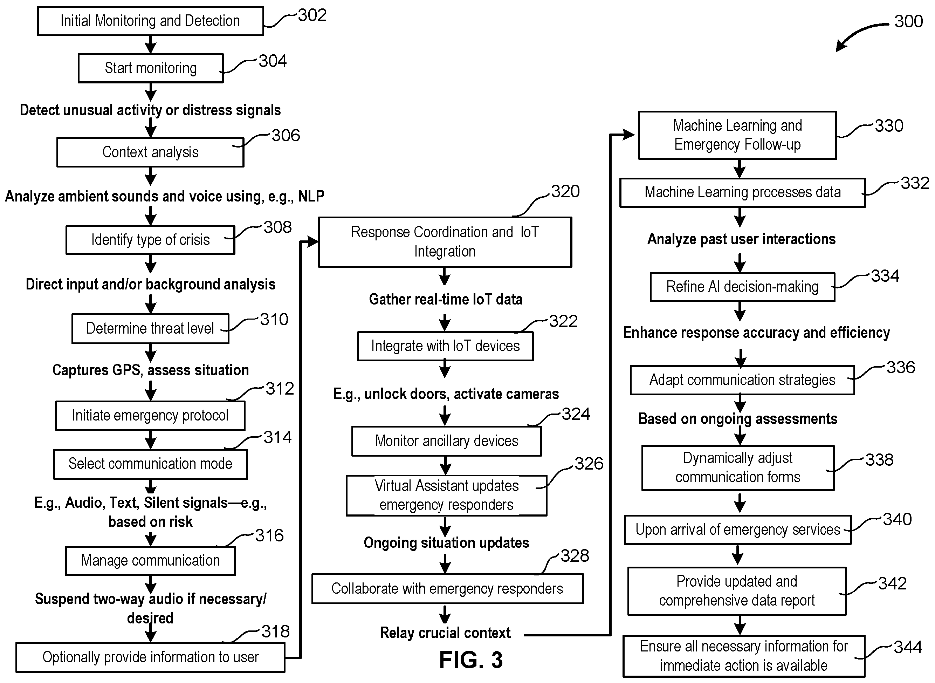

FIG. 3 illustrates an electronic context-aware emergency communication method in accordance with examples of the disclosure. Method 300 illustrates particular examples of method 200, in which the virtual assistant is automatically activated upon a detection of an event. The step of initiating an emergency electronic communication can be automatically performed by the virtual assistant upon determination of the emergency event.

In general, method 300 includes using an electronic communication device comprising a virtual assistant, monitoring background information for a possible emergency event, using a context determination engine, determining whether the possible emergency event is an emergency event, using the electronic communication device, initiating an emergency electronic communication, and using the electronic communication device, transmitting context-based information to an emergency response service provider. During method 300, the virtual assistant can determine a preferred mode of communication (e.g., text, VolP, cell) between the electronic communication device and the emergency response service provider. As above, method 300 can also include receiving ancillary information from an ancillary device and transmitting the ancillary information to the emergency response service provider. The step of transmitting the ancillary information can include sending real-time user health information. Additionally or alternatively, method 300 can include a step of sending information to a responder device based on the context-based information and/or a step of, using the virtual assistant, manipulating one or more of audio output and visual output on the electronic communication device.

In the illustrated example, electronic context-aware emergency communication method 300 includes three sections: initial monitoring and detection 302, response coordination and loT integration 320, and machine learning and emergency follow up 330.

Initial background information monitoring and detecting 302 can include, for example, using an electronic communication device comprising a virtual assistant, monitoring background information for a possible emergency event. Such monitoring can include monitoring using user behavior and environmental sensor data. If unusual activity and/or predetermined activity (e.g., a crash, irregular heartbeat, or the like) is detected, the virtual assistant on the electronic communication device is activated.

During step 304, a virtual assistant, such as virtual assistant 118, is activated. Once the virtual assistant is activated, the electronic communication device can begin or can continue to monitor information (e.g., background and/or direct (e.g., audible or GUI) information provided by the user) during step 304. During step 304, real-time location and personal data can be obtained (e.g., by the virtual assistant).

During step 306, a context determination engine is used to determine whether the possible emergency event is an emergency event. The context analysis can be performed on direct or background information provided to the electronic communication device. If the context determination engine is separate from the electronic communication device, step 306 can include using the electronic communication device, initialing an electronic communication (e.g., an emergency call) if a communication has not already been established. Alternatively, the context analysis can take place on the electronic communication device. The context analysis can include analysis of the background information or spoken or typed words. Additionally or alternatively, the context analysis can include a step of determining stress in the caller's audio or text information. NLP and/or Al can be used to formulate the context and/or the stress. The context can be determined, for example, by detecting keywords, such as emergency keywords (e.g., help, fire, intruder, shot, synonyms thereof and the like), in the background or during a communication.

During step 308, a type or nature of the emergency event is determined. The type of event can be determined using combined data that includes two or more behavior, sensor information, and voice and/or text information. During this step or another step, a location and/or a number of people involved in the emergency can be determined-e.g., via context determination engine 122 and/or virtual assistant 118.

During step 310, a threat level is determined. Threat levels can be as described above or can include, for example, Extreme (e.g., nuclear threat, or mass shooting), High (e.g., fire, break in, shooting, heart attack) Moderate (e.g., medical issue, such as low blood sugar, irregular heartbeat), or Low (e.g., minor injuries, dog barking, or the like).

During step 312, an emergency protocol is initiated based on a context determined by the context determination engine.

During step 314, the virtual assistant automatically selects a (e.g., preferred or default) communication mode (e.g., audio, text, and/or haptic). The virtual assistant can present suggested communication modes or automatically initiate a communication or switch to a communication with the selected mode of communication. For example, if a risk level is extreme or high, the virtual assistant can suspend two-way communication (e.g., turn off speakers 116 and/or 130 and/or display 114 and/or 128 of electronic communication device 102 or 110) and/or cause other action to be taken as described above in connection with method 200.

During step 316, the virtual assistant can perform or cause to be performed one or more actions. For example, the virtual assistant can relay emergency details to responders via text or data. As noted above, the action can be based on an emergency type and a threat level. For example, if the risk level is moderate (e.g., 3/5 or less): maintain two-way communication with enhanced monitoring. Otherwise, the virtual assistant can continue monitoring without immediate action. The virtual assistant can dynamically adjust communication strategies or actions, based on information received by the electronic communication device and/or an ancillary device during the emergency.

During step 318, the virtual assistant optionally provides information to the user. For example, the virtual assistant can cause a message to be displayed on the electronic communication device. Exemplary messages can inform the user that the virtual assistant is monitoring the call and is providing information to the emergency response service provider.

The electronic communication device and the virtual assistant can electronically communicate with one or more loT devices, such as wearable devices, door locks, video cameras, microphones, speakers, and the like. Information can be conveyed between the virtual assistant and the loT/ancillary devices.

During step 322, various electronic devices (referred to herein as ancillary and/or loT devices) can be integrated with the electronic communication device and/or the virtual assistant. The integration can be accomplished using, for example, mobile, Wi-Fi, and/or Bluetooth (e.g., verified) connections.

At step 324, the virtual assistant checks and/or monitors ancillary device activity. For example, a heart rate and/or rhythm may be monitored during an emergency-e.g., after an emergency communication is initiated.

During step 326, the virtual assistant can provide ancillary device activity information to the emergency response service provider during the electronic communication.

During step 320, the virtual assistant can communicate with a responder. For example, the virtual assistant can inform the responder that the caller is not able to speak and convey information from the electronic device and/or ancillary device to the responder.

Machine learning and emergency follow-up stage 330 can begin with machine learning processing data step 332. This step can include, for example, analyzing a user's and/or other user's past communications based on an emergency event and/or an emergency type and threat level.

As step 334, artificial intelligence (AI) decision making can be refined. For example, an Al engine can analyze background information for various users and/or devices to determine likely emergency situations' emergency types, threat levels, and the like.

At step 336, communication strategies of the virtual assistant are adapted based on refined AI decision making step 334.

At step 338, AI can be used to dynamically adapt communication strategies based on ongoing assessments of the situation, adjusting the forms of communication as the emergency unfolds.

At step 340, upon arrival of emergency services at a scene, the system can provide a comprehensive and updated data report (e.g., user name, age, health information) (step 342) through the virtual assistant, to provide desired information to responders (step 344) to facilitate expeditious provision of emergency services.

In accordance with other examples of the disclosure, the electronic communication device can be or include an automobile. In this case, a variation of method 200 and/or 300 includes connecting an API and integrating the API with vehicle telemetry systems to plug into advanced sensors and technologies that detect an accident and relaying detailed crash or accident information during an electronic communication. In this case, the API is or includes the virtual assistant. The electronic communication system can capture and impart data, such as the number of occupants, the vehicle's speed, impact force, and specific points of impact. Upon detecting a crisis event, the system automatically communicates this information via the virtual assistant to emergency services through the API. This variation not only provides immediate alerts but also ensures that first responders receive precise, actionable insights before they arrive at the scene, improving the chances of timely and effective intervention.

The present invention has been described above with reference to a number of exemplary embodiments and examples. It should be appreciated that the particular embodiments shown and described herein are illustrative of the invention and its best mode and are not intended to limit in any way the scope of the invention as set forth in the claims. It will be recognized that changes and modifications may be made to the exemplary embodiments without departing from the scope of the present invention. These and other changes or modifications are intended to be included within the scope of the present invention, as expressed in the following claims.

## Claims

1. An electronic communication method comprising the steps of:
using an electronic communication device comprising a virtual assistant, monitoring background information for an emergency event;
determining a context of the emergency event;
using the electronic communication device, initiating an electronic emergency communication; and
transmitting context-based information to an emergency response service provider.

2. The electronic communication method of claim 1, wherein the virtual assistant automatically initiates the electronic emergency communication.

3. The electronic communication method of claim 1 or claim 2, wherein determining the context comprises determining a type of the emergency event.

4. The electronic communication method of any preceding claim, further comprising determining a threat level of the emergency event.

5. The electronic communication method of any preceding claim, further comprising a step of monitoring a call context, wherein, based on the call context, the virtual assistant suspends or manipulates one or more of audio output and visual output on the electronic communication device.

6. The electronic communication method of any preceding claim, further comprising a step of monitoring a call context, wherein, based on one or more of the call context and the context-based information, the virtual assistant provides information to a user, indicating that the virtual assistant is handling the emergency electronic communication.

7. The electronic communication method of any preceding claim, further comprising providing information from a call server to the emergency response service provider.

8. The electronic communication method of any preceding claim, further comprising a step of sending ancillary information from an ancillary device via the electronic communication device to the emergency response service provider.

9. An electronic context-aware emergency communication method comprising the steps of:
using an electronic communication device comprising a virtual assistant, monitoring background information for a possible emergency event;
using a context determination engine, determining whether the possible emergency event is an emergency event;
using the electronic communication device, initiating an emergency electronic communication; and
using the electronic communication device, transmitting context-based information to an emergency response service provider.

10. The method of claim 9, wherein the virtual assistant determines a preferred mode of communication between the electronic communication device and the emergency response service provider.

11. The method of claim 9 or claim 10, further comprising receiving ancillary information from an ancillary device and transmitting the ancillary information to the emergency response service provider and optionally wherein the step of transmitting the ancillary information comprises sending real-time user health information.

12. The method of any of claims 9 to 11, further comprising a step of sending information to a responder device based on the context-based information and/or further comprising a step of, using the virtual assistant, manipulating one or more of audio output and visual output on the electronic communication device.

13. A system for providing context-aware emergency information, the system comprising:
an electronic communication device comprising a virtual assistant; and
a context determination engine,
wherein the virtual assistant monitors background information received by the electronic communication device for a possible emergency event, and
wherein the context determination engine determines a context of the possible emergency event and provides context information to the virtual assistant.

14. The system of claim 13, wherein the virtual assistant manipulates one or more of audio output and visual output on the electronic communication device based on the context information.

15. The system of claim 13 or claim 14, wherein the electronic communication device comprises the context determination engine.
